# EUROPEAN PATENT APPLICATION

(11) **EP 1 713 296 A1**
(43) Date of publication of application: **18.10.2006**
(21) Application number: 05425229.1
(22) Date of filing: 15.04.2005
(51) Int. Cl.: H04Q 9/00

(54) **Remote managing and controlling system for supplying electric energy**

(71) Applicant: Acea Distribuzione S.p.A., 00154 Roma (IT)
(72) Inventor: Mirra, Claudio, 00154 Roma (IT)
(74) Representative: Iannone, Carlo Luigi

(57) **Abstract**

The invention relates to a remote managing and controlling system for supplying services, particularly for supplying electric energy, characterised in that it comprises a managing centre (2), connected by first data transceiver means (3, 4) with a plurality of concentrators (5), said concentrators (5) being connected with a plurality of meters (6), by second data transceiver means, said meters (6) being provided in said network (7), so as to make measures and detecting operation parameters; and in that the service provider, by said managing centre (2), can make a remote operation diagnosis on the components of the distribution network (7) and/or on a single line, receiving said parameters or settings from said concentrators and meters (6), through said concentrators (5), and making variations of the operation settings of said network and/or of said single line (7).

## Description

The present invention relates to a remote managing and controlling system for supplying services, particularly for supplying electric energy.

More specifically, the invention concerns a system studied and realised particularly for controlling and managing the supply of electric energy, but that can be used for every kind of widespread consumption service, allowing managing the delivery of the service and communication of relevant information both to operative and economic aspects, also able to manage a failure informative and signalling action by the final user.

In the following, the specification will be addressed to the application of the system to the supplying of electric energy, but it is well evident that said application must not be considered limited to this specific use.

As it is well known, it is presently occurring a liberalisation of supplying various services, such as electricity, water, gas, heat or managing of public illumination. This involves an increase of the competition and thus stimulates companies to provide additional services to the same supplying, in order to acquire market quote.

At present, electric field companies aims providing to the user instruments for a more aware consumption of electric energy.

It is in fact known that meters are used allowing measuring the consumption. The user can monitor his own energy consumption, through the lecture of his own meter and he can warn the provider in case of detection of anomalies.

Obviously, it is very difficult for a user being aware of the above-mentioned anomalies, unless he makes a constant monitoring. In fact, it has been noted that the user notices a failure mainly after receiving the payment invoice.

On the other end, the provider cannot make a remote monitoring and managing of tariffs and failures, but it can be done only by having its personnel directly examining the meter, as well as they cannot provide a quick intervention for restoring the supply.

Furthermore, service provider is protected against possible meter tampering only by making controls directly with the client.

Finally, being managing of payments made after the information received from the user, control of meter readings by the specialised personnel is very expensive and slow.

The object of the present invention is therefore that of providing a remote managing and controlling system, or remote control/remote managing, that can be used for different service networks (electricity, public illumination, water, gas, heat, ecc.) allowing to the provider the operative and commercial managing of the supply network, and to the consumer to control his consumption and being able giving information to the provider.

A second object of the invention is that of allowing a reduction of exercise and metering costs.

A third object of the present invention is that of allowing the use of electric lines to transmit data in order to reduce costs and increase productivity of the same electrical network.

A further object of the present invention is that of allowing to the system according to the invention to contemporaneously control different services.

It is therefore specific object of the present invention a remote managing and controlling system for supplying services, particularly for supplying electric energy, characterised:
- in that it comprises a managing centre, connected by first data transceiver means with a plurality of intermediate interface means, also indicated as "concentrators", said concentrators being connected with a plurality of measure and data acquisition means, also indicated as "meters", by second data transceiver means, so as to make measures and detecting operation parameters;
- in that the service provider, by said managing centre, can make a remote operation diagnosis on the components of the distribution network and/or on its components, receiving said parameters or settings from said concentrators and meters, through said concentrators, and making variations of the operation settings of the same and of the distribution network and/or of its components.

Always according to the invention, said system can further comprise an informative access device, thus the user detecting data relevant to consumption and transceiving messages, by third transceiver means for connection with said meters and for connection with said managing centre; said user being able monitoring by said device his use of the service and the operation of said meter and communicating possible failures to said provider.

The applicant has already filed the Italian Utility model Application n° RM2000U000198, concerning a terminal communication device, suitable to be used by a final user. The latter, applying said device to the power supply, can obtain different information and data, such as the consumption level and the total monthly cost. Furthermore, he can communicate with the service provider.

Still according to the invention, said further transceiver means can comprise radio telecommunications, PLC (Power Line Carrier), phone cables and so on.

Furthermore, according to the invention, said first data transceiver means can comprise a telecommunication network, such as the telephone network, the GSM, GPRS, UMTS WI FI radio network, an optical fibre network or any other kind of network.

Always according to the invention, said managing and control centre can comprise a local internal network to which processing means and data memorisation means are connected.

Still according to the invention, said data processing means can comprise a plurality of functional modules.

Advantageously, according to the invention, said functional modules can comprise a module for managing the electric network suitable to automatically detect the topology of said network, to the acquisition of losses and other processing relevant to the operation of the electric energy distribution network, or of other services.

Furthermore, according to the invention, said functional modules can comprise a module for managing the quality of supply service suitable to the acquisition of data collected by said concentrators and by said meters for processing statistic data relevant to the quality of service of said network.

Always according to the invention, said functional modules can comprise a module for managing said concentrators and/or said meters and/or said access devices, suitable to manage calendars and/or warning and messages destined to the measure device and/or access device and/or acquiring and printing operation information.

Furthermore, according to the invention, said functional modules can comprise a client managing module, interfaced with an informative system containing commercial information relevant to the clients, said module being suitable to periodically examining the data contained in said informative system of the user so as to carry out reading of consumption, commercial operations and/or communicating invoicing data.

Still according to the invention, said data processing modules can comprise a unit for controlling the configurations and/or an outer interface, by which operators can vary operation parameters of the system or of a specific user.

Furthermore, according to the invention, said memorisation means can comprise a database and/or a device for saving data.

Preferably, according to the invention said network can comprise at least a safety and/or router device, by which it is connected with outer communication interfaces, that can comprise the Internet and/or a portal and/or a supervision and control system for the distribution network.

Still according to the invention, said concentrators and said meters can be distributed on at least two levels and they can comprise failure detectors.

Always according to the invention, said meters can comprise an electronic control unit, preferably a microprocessor.

Furthermore, according to the invention, said concentrators can comprise tension and/or failure and/or electric power and/or energy and/or system signals detectors.

Always according to the invention, said second and third data transceiver means preferably transmit data through waves sent along said electric network, or through the radio, preferably according to a frequency or phase shifting modulation (FSK, PSK).

Advantageously, according to the invention, said parameters or settings can comprise tariffs and/or invoicing to a client and/or qualification, provisional suspension and interruption of the service and/or anomalous operation conditions of the distribution network.

Furthermore, according to the invention, said network can also be suitable to the distribution of water and/or gas and/or heat and/or electric energy for public illumination.

The present invention will be now described, for illustrative but not limitative purposes, according to its preferred embodiments, with particular reference to the figures of the enclosed drawings, wherein:

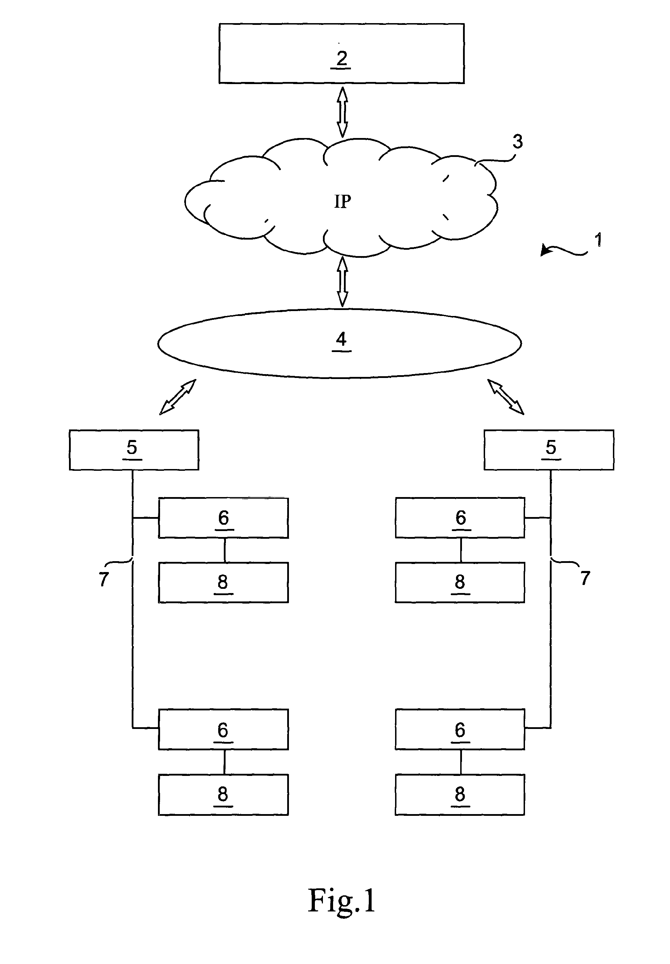

figure 1 is a block diagram of the remote managing and controlling system for a network to supply electric energy;
figure 2 shows a communication circuit of the system according to figure 1;
figure 3 shows a medium/low tension transformation cabin;
figure 4 shows the managing centre of the system according to the invention;
figure 5 shows a remote managing and controlling system according to the present invention for a plurality of different services; and
figure 6 shows a scheme of modules implemented in the managing centre.

Making reference to figure, it is possible observing the general scheme of the remote managing and controlling system 1 for supplying electric energy, according to the present invention.

It can be noted the presence of a managing centre 2 connected through the Internet (IP network). From here, it is possible communicating with concentrators 5 by a telecommunication data channel 4 (GSM, GPRS, UMTS, PSTN, WiFi, optical fibres, ecc.).

Said concentrators are detection devices installed for centralised control of a group of users, fro example supplied by a medium/low tension cabin, or the inhabitants of a building.

Meters 6 are connected with said concentrators 5. In the embodiment described, said measure devices 6 are electric energy electronic meters.

Concentrators 5 and electric meters 6 are connected each other by the low tension electric network.

Finally, access devices (communication terminals) 8 can be connected with said measure devices 6 by the final user, through which said user can obtain all the information relevant his own consumption.

Said electronic meters 6 can be single or arranged meters, on the basis of the user. Communication terminals 8 also provide transceiver means, suitable to allow receiving and sending messages to the managing centre 2. Said centre 2 can, through the above mentioned network, make remote adjustment of the energy supplying network to the single user, but also detecting failures of the global network.

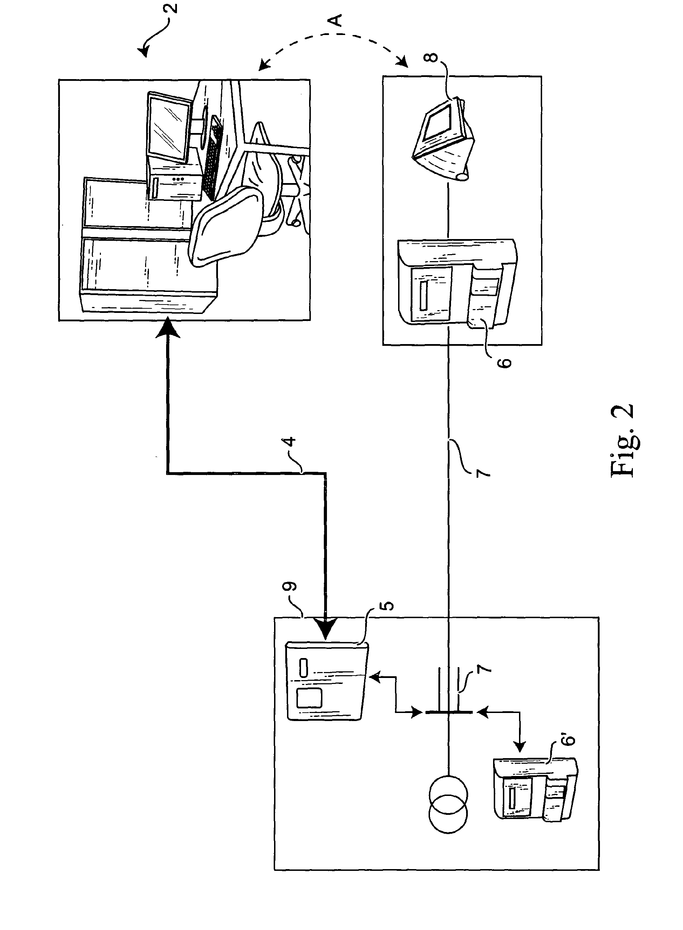

In order to better understand the operation of the system 1 according to the present invention, figure 2 shows the communication circuit from the managing centre 2 to the final user.

Between the managing centre 2 and the Internet 3 a remote wireless connection with concentrators 5 is provided.

Concentrators are destined to carry out the following functions:
- continuous interrogation of peripheral units, particularly of the measure devices of electronic meters 6;
- daily reading of invoicing data;
- state information acquisition;
- daily acquisition of service continuity and of tension quality;
- meter diagnostic;
- daily acquisition of load curves;
- communication with peripheral units through PLC sent wave and with the managing centre by PLC, GSM, GPRS, PSTN, UMTS, WiFi, optical fibres, ecc.

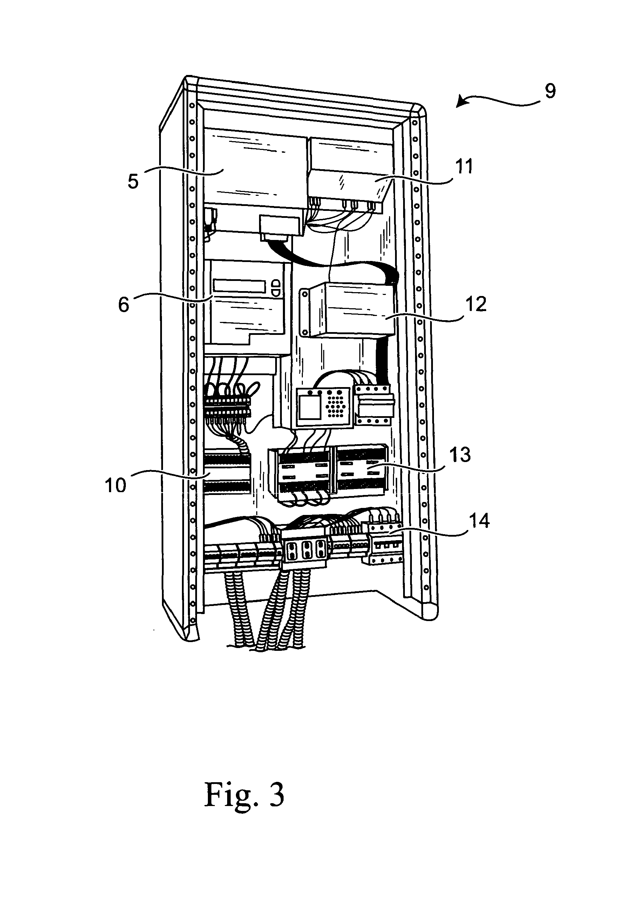

Said concentrators 5 are generally installed in medium/low tension cabins 9, as it can be noted from figure 3. Said medium/low tension cabin 9 comprises inside, beside the concentrator 5, electronic meter 6', a failure detector 10, a feeder 11, a battery 12, a voltage detector 13 and terminal boards 14.

Coming back to figure 2, it can be noted that concentrator 5 is connected to the electronic meter 6 of the specific user, to which the latter can interface by the communication terminal device 8. the latter, as it can be noted, can bi-directionally communicate (see arrow A) with the managing centre 2. Connection can be direct or indirect by an Internet service centre, interfacing with the network managing centre.

Said terminal communication device 8 is further destined to the following typical functions and features:
- communicates by bi-directional conveyed wave;
- can be inserted in every kind of outlet;
- presents the information of an outside meter 6;
- provides information about the service and the invoicing;
- can close by remote control the outside meter 6 switch (if provided with a recharging motor);
- communicates with the managing centre for exchanging messages;
- manages the payment.

Conveyed wave transmission preferably occurs in FSK (Frequency Shift Keying) or PSK (Phase Shift Keying) modulation.

Meter 6' is of the tri-phase type with semi direct insertion, while meter 6 can be of two different kinds. Three-phase in case of industrial, commercial use, and for stabile services, or monophase in case of domestic users. All meters of the present embodiment are able to make the following measurements:
- active and reactive energy: registered on four quadrants;
- power and power factor (four quadrants);
- load peaks;
- load curves in time intervals that can be programmed (from 1 minute to 1 hour);
- tension characteristics: values outside the adjustment range, with peaks, duration and unbalancing.

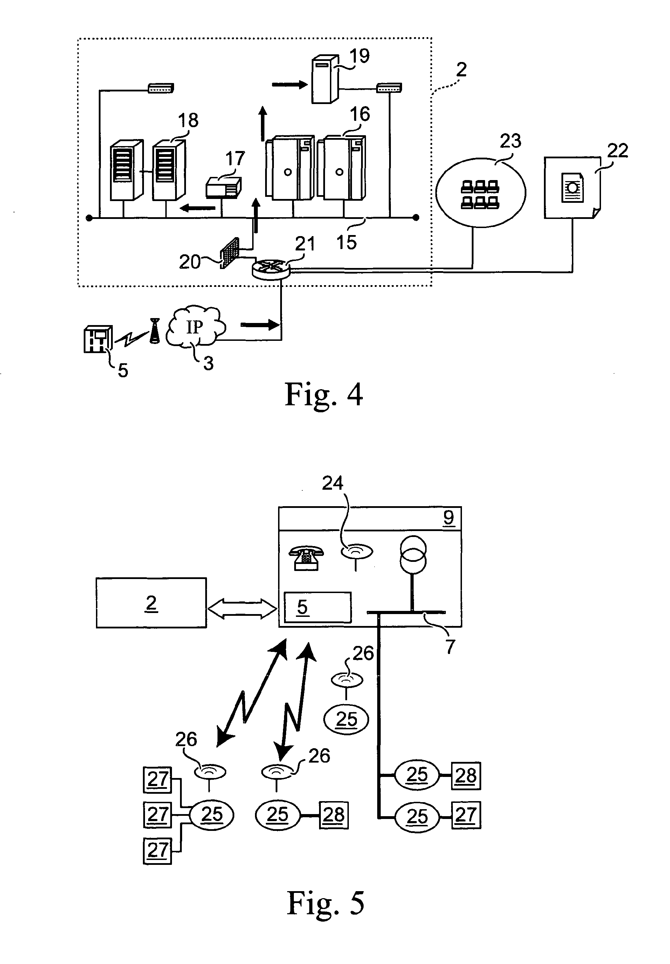

Figure 4 shows the detail of the managing centre 2. it provides, all connected to an inner network 15, a database 16, a data saving device 17, a unit for controlling the configurations 18 and one or more outer interfaces 19 by which operators can make centralised processing and variations of the system.

Network 15 is connected at the Internet 3, at a portal 22 and at further informative and operative inner terminals, by safety devices 20 and a router 21.

From the managing centre 2 it is possible managing a high number of operations, even commercial operations, such as reading meters 6 and 6' at set times, remote modification of tariffs, according to hour, daily, weekly, monthly or season tariffs. It is possible remote assigning of contract power or remote activation or interruption of a supply and suspending it in case of emergency. It is further possible managing prepayment and individuating irregular consumption and tampering, as well as possible failures.

Loading of meters 6, 6' into the database of the system automatically occurs during installation, by a "plug and play" mode. Also transfer of meters 6 from a medium/low tension to another in case of variation of network exercise schemes is automatically registered.

This last possibility allows installing meters 6 also when network maps are not available and to obtain updating of the same maps. The system according to the invention can be used for the integrated managing of different kind of exercises. Particularly, making reference to figure 5, it is possible observing the managing centre 2, connected to the concentrator 5 provided inside the cabin 9. said concentrator 5 provides, beside the regular conveyed wave connection with the electric network 7, also a radio frequency transceiver device 24 or another kind of device. This allows the connection between said concentrator 5 and the electronic control units 25 associated with meters of different services, indicated for exemplificative and not limitative purposes as water 27 and gas 28. these electronic control units too comprise transceiver devices 26.

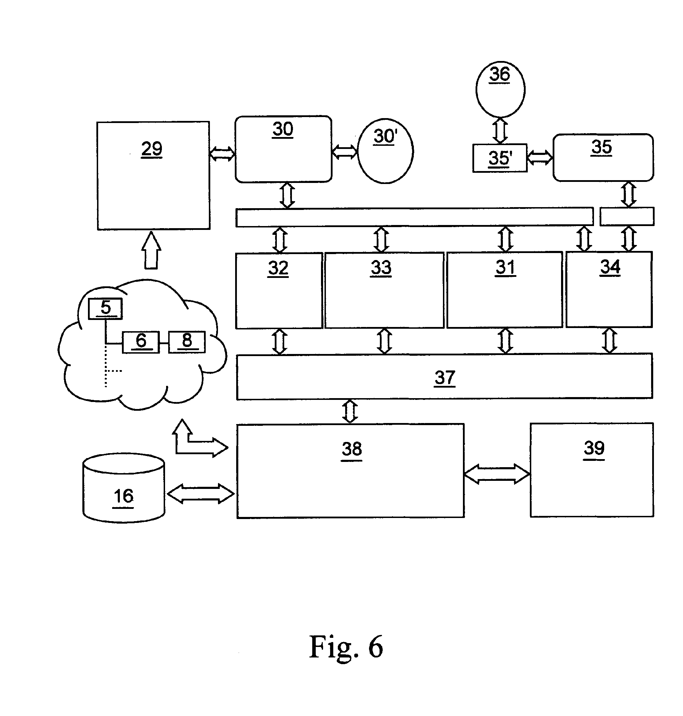

In figure 6, it is represented the assembly of functional modules implemented in the managing centre 2. it is provided a subassembly for controlling the network 29, comprising a plurality of terminals and allowing interfacing said managing centre 2 with Internet 4. Said subassembly 29 is connected by an interface 30 with a network centre 30' and with a plurality of managing modules. Said interface 30 has, among the others, the duty of making a switching of possible alarm signals coming from the system 1.

Then, they are provided an electric network managing module 31, a quality managing module 32, a peripheral apparatus managing module 33, and a final client managing module 34. the last module is further connected with an interface for final user 35 for connection of the above final client managing module 34 with a user informative module 36 by a server 35'.

Said modules 31 - 34 are connected with a communication bus 37 to which are further connected a service module 38 and an interface for communication of the peripheral apparatuses 39, allowing a translation of the controls of said service module38 from and to peripheral apparatuses.

Service module 38 implements the following functionalities of the system:
- definition of system functional modules (client);
- definition of system operators/users and assignment of profiles and passwords;
- managing of user profiles;
- managing of system database accesses 16;
- managing of communication with periphery;
- managing of communication with client modules;
- managing of queues for receiving data from periphery and for sending data toward periphery;
- supervision of the system;
- service protocol.

Final client managing module 34 ahs the task of interfacing with the user informative system. The latter contains the commercial information relevant to clients and manages the commercial transactions.

Communication with the user informative system 36 is managed by said final user interface 35, having the task of periodically accessing to a buffer area where the user informative system 36 writes data that the managing centre must process.

Data written and processed by the user informative system 36 are periodically read and at the same time responses are written that must be reported from managing centre 2 to the same user informative system 36. Periodicity of reading and writing operations can be set.

Interface 35 toward the user informative system 36 provides the following information exchange typologies:
- orders of operative activities;
- reading of consumptions;
- updating of files;
- communication of invoicing data;
- detection of topology of user informative system 36.

All exchanges between user informative system 36 and managing centre 2 preferably occur through files, for example XML files, translating databases tables of the two systems, for example Oracle.

Final client managing module 34, besides transmitting invoicing data to the communication terminal devices 8, supports execution of the following operative user managing activities required by the user informative system 36;
- allacci;
- arrearage breakdowns;
- power variations;
- season activation/deactivation;
- supply termination;
- contract data and tariffs data programming;
- single readings.

System can be configured in such a way that most delicate typologies intervention (e.g. breakdowns) require validation of an operator by server 35', to be carried out.

After the installation of said measure devices 6, final client managing module 34 can acquire possible topology data from the user informative system 36, entered by the operators for updating the network registry.

Electric network managing module 31 implements, for the low tension network, the following functionality:
- electric network topology;
- automatic detection of communication topology;
- low tension line detection for supplying communication terminal devices 8;
- periodic activities of acquisition of the information from the concentrators 5;
- energetic balances;
- load managing;
- alarm configuration;
- electric network topology.

Database 16 of the managing centre 2 contains a representation of the distribution electric network from the medium/low tension cabins to the measure devices 6 or electronic meters.

Topology information are acquired from the electric network managing module 31 according to three different modes:
- from the user informative system 36 through the interface with the managing centre 2;
- by manual introduction from the operator terminal;
- from the concentrators 5 by the plug & play function.

Said plug & play function is implemented on the concentrators 5, automatically detecting the communication terminal devices 8 on the low tension network.

At the end of the procedure, concentrators 5 communicate to the managing centre 2 possible presence of newly acquired communication terminal devices 8 that are inserted in the registry of database 16 of the same managing centre 2.

By a semi-automatic procedure, electric network managing module 31 is able knowing on which low tension line it is provided each communication terminal device 8.

Electric network managing module 31 further periodically carries out reading and loading activities in its own database (not shown in the figures) of the following information acquired from the concentrators:
- concentrator registry;
- concentrator parameters;
- addresses of the communication terminal devices 8;
- routing information for the communication terminal devices 8;
- list of communication terminal devices 8 that can be reached;
- list of communication terminal devices 8 that can not be reached;
- total amount of energy in the current month;
- daily load curves for the authorised communication terminal devices 8;
- segregated energy totalisator, if present energy daily files;
- monthly or annual energy files;
- data about service interruptions and statistics of the power or managing centre 2 - concentrator's communication excess;
- statistics of concentrators 5 - communication terminal devices communication;
- energy balances.

Starting from the readings made on the concentrators 5, electric network managing module 31 is able making processing relevant to the energy entered or absorbed by the low tension network and the network balance.

Said module 31 allows a managing of the network loads. Particularly, it is possible reducing the load on homogeneous groups of communication terminal devices 8, in such a way to optimise the managing of possible energetic lacks. Said load reductions can be carried out according to two different modes:
- emergency: it is ordered to the communication terminal devices 8 a threshold of the maximum power that can be absorbed corresponding to a set percentage of the contract power;
- programmed: a weekly reduction plane is loaded on the communication terminal device 8.

It is also possible setting a mapping of all the alarms present on each concentrator 5 for displaying on the operator terminal.

Concentrators 5 detect alarm signals, relevant to failures of the medium or low tension network or environmental alarms (e.g. fire).

Peripheral apparatus managing module 33 allows reading and configuration of concentrators 5 parameters, of measure devices 6, of communication terminal devices 8 and execution of specific activities on the same.

A first function of said module 33 is *debugging,* allowing reading and printing various information.

Peripheral apparatus managing module 33 also manages warnings and messages destined to measure devices 6 and/or communication terminal devices 8.

A further function of the peripheral apparatus managing modules 33 is that of managing calendars of peripheral apparatuses, by definition of hour and day in concentrators 5 and measure devices 6. Moreover, it allows definition of the beginning and ending of the legal hour period in measure devices 6, if different from those provided by the European rules. It is possible programming scheduling of periodic activities on concentrators 5, setting frequency, starting time and priorities. Moreover, it is possible setting up to 10 midweek holidays not legate with calendar.

Finally, said peripheral apparatus managing module 33 allows controlling updating a new software version on concentrators 5 or on measure devices 6.

Quality managing module 32 uses data collected by concentrators 5 for processing data relevant to electric energy supply service quality or quality of other services, necessary for drafting annual reports for the competent authorities.

A first possible processing is that allowing programming nominal maximum and minimum thresholds for calculating tension unbalance on measure devices 6.

Upon request of the operator, quality managing module 32 can make available the following data (total or for density fascia, both for the current year and for the previous year):
- number of short interruptions;
- number of long interruptions;
- average duration of cumulate long interruptions.

On the basis of the previous description, it can be observed that the basic feature of the present invention is the fact of suggesting an immediate control of the delivery of a service both under a commercial and operative point of view, also allowing managing of informative action by the client.

An advantage of the present invention is the fact of allowing a reduction of the invoicing cost, thanks to the fact that readings are carried our far from the system, without possible keystroking mistakes. Further, higher precision and stability of digital meters allow obtaining further incomes with respect to the traditional meters.

A further advantage of the present invention is the reduction of frauds, being it possible eliminating illegal consumptions and tampering of meters.

Still an advantage of the present invention is the fact that it allows reducing traffic in phone contact centres, since:
- invoicing data are directly available to the clients by the communication terminal device;
- invoicing is made on the real consumptions, thus avoiding phone calls from the clients for communicating readings, and reducing check activities: energy balances of medium or low tension transformer, self-diagnostic of meters and anti-tampering devices will allow individuating failures;
- times are reduced for individuating failures thanks to the use of medium tension failure detectors and low tension line tension detectors, noticeably reducing times for individuating the same failures.

Finally, an advantage of the present invention is the fact that acquisition of data for exercise of the above networks allow detecting and proving by documents the quality of service.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Remote managing and controlling system for supplying services, particularly for supplying electric energy, **characterised in that** it comprises a managing centre, connected by first data transceiver means with a plurality of concentrators, said concentrators being connected with a plurality of meters, by second data transceiver means, said meters being provided in said network so as to make measures and detecting operation parameters; and **in that** the service provider, by said managing centre, can make a remote operation diagnosis on the components of the distribution network and/or on a single line, receiving said parameters or settings from said concentrators and meters, through said concentrators, and making variations of the operation settings of said network and/or of said single line.

2. System according to claim 1, **characterised in that** it comprises an informative access device, thus the user detects data relevant to consumption, by third transceiver means for connection with said meters and for connection with said managing centre; said device further comprising data transceiver means for connection with said managing and control centre, said user being able monitoring by said device operation and use of sadi network, communicating possible failures to said provider and making remote control of the meter switch when the same switch is provided outside.

3. System according to claim 2, **characterised in that** said further transceiver means comprise a telecommunication network, preferably GPRS and/or UMTS.

4. System according to one of the preceding claims, **characterised in that** said first data transceiver means comprise a telecommunication network, preferably but not exclusively GSM, GPRS.

5. System according to one of the preceding claims, **characterised in that** said first data transceiver means comprise the Internet.

6. System according to one of the preceding claims, **characterised in that** said managing and control centre comprise a local internal network to which processing means and data memorisation means are connected.

7. System according to claim 6, **characterised in that** said data processing means comprise a plurality of functional modules which can be independently replaced.

8. System according to claim 7, **characterised in that** said functional modules comprise a module for managing the electric network.

9. System according to claim 8, **characterised in that** said module for managing the electric network is suitable to automatically detect the topology of said network and/or to the acquisition information from said concentrators, and/or to the calculation of energy balances.

10. System according to one of the preceding claims 7 - 9, **characterised in that** said functional modules comprise a module for managing the quality of supply service.

11. System according to claim 10, **characterised in that** said module for managing the quality of supply service is suitable to the acquisition of data collected by said concentrators for processing statistic data relevant to the quality and efficiency of service of said network.

12. System according to one of the preceding claims 7 - 11, **characterised in that** said functional modules comprise a module for managing said concentrators and/or said meters and/or said access devices.

13. System according to claim 12, **characterised in that** said module for managing the peripheral apparatus is suitable to manage calendars and/or warning and messages destined to the measure device and/or access device and/or communication terminal devices, and/or acquiring and printing operation information.

14. System according to one of the preceding claims 7 - 13, **characterised in that** said functional modules comprise a client managing module.

15. System according to claim 14, **characterised in that** it comprises an informative system containing commercial information relevant to the clients interfacing with said client managing module.

16. System according to one of the preceding claims 14 or 15, **characterised in that** said client managing module is suitable to periodically examining the data contained in said informative system of the user so as to carry out reading of consumption, commercial operations and/or communicating invoicing data.

17. System according to one of the preceding claims 6 - 16, **characterised in that** said data processing means comprise a unit for controlling the configurations.

18. System according to one of the preceding claims 6 - 17, **characterised in that** said data processing means comprise an outer interface, by which operators can vary operation parameters of the system or of a specific user.

19. System according to one of the preceding claims 6 - 18, **characterised in that** said memorisation means comprise a database.

20. System according to one of the preceding claims 6 - 19, **characterised in that** said memorisation means comprise a device for saving data.

21. System according to one of the preceding claims, **characterised in that** said network comprise at least a safety and/or router device, by which it is connected with outer communication interfaces.

22. System according to claim 21, **characterised in that** said outer communication interfaces comprise the Internet and/or a portal.

23. System according to one of the preceding claims, **characterised in that** said meters are distributed on at least two levels.

24. System according to one of the preceding claims, **characterised in that** said concentrators comprise failure detectors.

25. System according to one of the preceding claims, **characterised in that** said meters comprise an electronic control unit, preferably comprising a microprocessor.

26. System according to one of the preceding claims, **characterised in that** said network is suitable to supply electric power.

27. System according to one of the preceding claims, **characterised in that** meters comprise tension and/or failure and/or electric power and/or system signals detectors.

28. System according to one of the preceding claims 26 or 27, **characterised in that** said second data transceiver means transmit data through waves conveyed along said electric network.

29. System according to one of the preceding claims 26 - 28, when depending on claim 2, **characterised in that** said third transceiver means transmit data through waves conveyed along said electric network..

30. System according to one of the preceding claims 28 or 30, **characterised in that** said conveyed wave transmission provides a frequency or phase shifting modulation (FSK, PSK).

31. System according to one of the preceding claims, **characterised in that** said parameters or settings comprise tariffs.

32. System according to one of the preceding claims, **characterised in that** said parameters or settings comprise invoicing to a client.

33. System according to one of the preceding claims, **characterised in that** said parameters or settings comprise qualification or interruption of the service.

34. System according to one of the preceding claims, **characterised in that** said parameters comprise tension anomalous operation conditions and/or overcharge of the network.

35. System according to one of the preceding claims, **characterised in that** said network is be suitable to the distribution of water and/or gas and/or heat and/or electric energy for public illumination.

36. System according to each one of the preceding claims, substantially as illustrated and described.
